Europäisches Patentamt

European Patent Office

Office européen des brevets

(11) Publication number : **0 474 583 A2**

# (12) EUROPEAN PATENT APPLICATION

(21) Application number : **91610076.1**

(22) Date of filing : **06.09.91**

(51) Int. Cl.⁵ : **F16L 11/118, // F16L1/028**

(30) Priority : **07.09.90 DK 2158/90**

(43) Date of publication of application :
**11.03.92 Bulletin 92/11**

(84) Designated Contracting States :
**AT BE CH DE ES FR GB GR IT LI LU NL SE**

(71) Applicant : **TARCO ENERGI A/S**
**Erritso Mollebanke 10**
**DK-7000 Fredericia (DK)**

(72) Inventor : **Hansen, Troels Frank**
**Sandalvej 3**
**DK-7000 Fredericia (DK)**

(74) Representative : **Jeppesen, Finn Heiden et al**
**c/o Chas. Hude, H.C. Andersens Boulevard 33**
**DK-1553 Copenhagen V (DK)**

(54) **Plastic pipe to be laid in the ground.**

(57) Plastic pipe (1) to be laid in the ground and in particular to be used as a gas or water conducting pipe comprising a core pipe (2) of polyethylene provided with an outer hose (3) of a transparent thermoplastic rubber material having a higher flexibility than the material of core pipe (2). The plastic pipe (1) may be laid directly into the ground, e.g. by a continuous laying method, such as ploughing, as the thermoplastic rubber hose (3) is able to resist scratches and compressive stress arising partly during the actual laying and partly from stones, aggregate and the like in the ground. The laying of the plastic pipe (1) is thus particularly fast and economical.

EP 0 474 583 A2

The invention relates to a plastic pipe, preferably to be laid in the ground and in particular to be used as a gas or water conducting pipe.

When laying the above mentioned type of plastic pipe in the ground it is required by the authorities that the soil surrounding the pipe is substituted by a layer of well-defined gravel to protect the plastic pipe from damage caused by stones, aggregate and other sharpe items. Thereby the actual laying procedure is very time-consuming, as it is necessary to dig a canal having a depth of approximately 100 cm and a width at the bottom of approximately 20-25 cm, whereafter a levelling layer of at least 10 cm of sand or gravel is placed at the bottom of the canal. The pipe is then laid on top of the levelling layer, and a protective material of sand or gravel of at least 20 cm is placed on top of the levelling layer and the pipe. The canal is then filled with soil, compressed to a specific level and finally the rest of the soil is put on top together with any turf or the like on the surface of the ground and watered, if required.

When it is practically impossible or very difficult to remove the soil in order to obtain the required width and depth around the pipe, a protective pipe of plastic is placed about the conducting plastic pipe. The protective pipe is normally one standard dimension larger than the conducting plastic pipe to be protected. The actual laying procedure is thus particularly time-consuming and difficult, as the protective pipe is to be laid first, whereafter the conducting gas or water pipe is to be passed through the protective pipe over a long distance and is further to be assembled more often than when using the above laying procedure. The method is furthermore particularly expensive, as it requires the laying of two sections of plastic pipe.

When laying cables or pipes, where a protective layer of gravel or sand around the cable or pipe is not required, it has lately become standard practice to plough said cables and pipes, for instance electric cables, telephone cables and drainage pipes, directly into the ground. The cables or plastic pipes are drawn from a reel and through a cavity in the plough at the required laying level in the ground. The laying method may be carried out at a high rate of about 2 km per hour and is thus especially fast and economical. However, by this laying method the cables and the pipes are subjected to very extensive mechanical stresses, which often cause scratches and similar damages to the cables and the pipes.

When laying plastic pipes it is particularly important that the surface is prevented from being damaged, for instance by sharpe scratches or heavy stresses, as these lower the life of pipe considerably.

The object of the present invention is to provide a plastic pipe, in particular to be used as a gas or water conducting pipe which may be laid directly into the ground without the protective layer of sand or gravel around the pipe required by the authorities, whereby the pipe is able to resist the stresses to which it is subjected during the actual laying procedure as well as damage caused by stones, aggregate and other sharpe items in the ground.

The plastic pipe according to the present invention is characterised in that the pipe comprises a gas or water conducting core pipe provided with an outer hose of a thermoplastic material having a higher flexibility than the material of the core pipe.

As a result, the pipe is able to resist the extensive mechnical stresses to which it is subjected during a direct laying into the ground and at the same time resist the damage caused by stones, aggregate and other sharpe items in the ground per se. It is thereby possible to lay the pipe in a particularly fast and inexpensive manner in the ground without the especially time-consuming and difficult laying of a protective material around the pipe in the ground. The pipe may for instance be laid by means of a direct laying method, such as ploughing, whereby the pipe is drawn from a reel and passed further down and out through the plough at the required laying depth.

According to the invention the hose may be releasably mounted on the core pipe. It is thus particularly easy to assemble the two pipe sections, as the hose can be detached adjacent the pipe ends to be assembled.

Further, according to the invention the pipe may be manufactured by means of co-extrusion of the core pipe and the hose with adhesion of the same . The pipe is thereby particularly fast and cheap to manufacture.

Moreover, according to the invention the hose may be made from a transparent material, whereby it is possible to see messages being placed directly on the core pipe, said core pipe being protected by the hose.

Finally, according to the invention the hose may be made from a thermoplastic rubber material having a particularly high flexibility, whereby the hose may have a dimension, enabling it to grip thigthly around the core pipe at the same time as the rubber material is particularly advantageous in resisting blows and scratches.

The invention is described below with reference to the accompanying drawing, in which

Figure 1 is a sectional view of a gas pipe according to the invention to be laid in the ground,

Figure 2 is a assembly of two pipe section of the gas pipe shown in figure 1,

Figure 3 is a sectional view of a gas pipe laid by means of the conventional method, and

Figure 4 is a sectional view of a gas pipe according to the invention laid by means of ploughing.

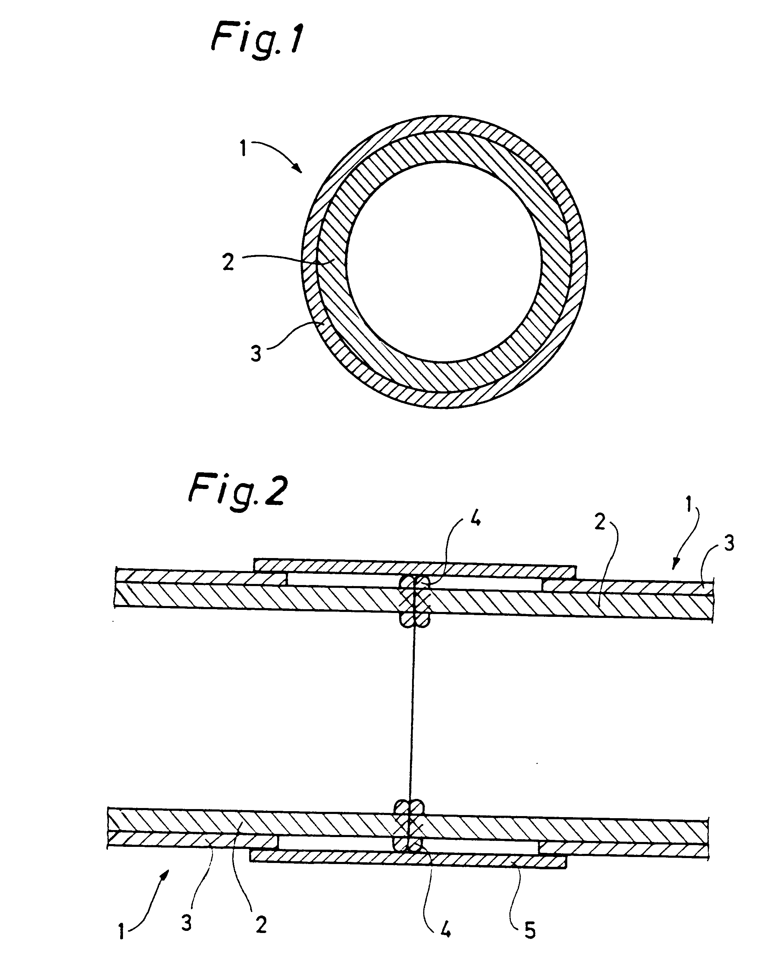

The gas plastic pipe 1 shown in figure 1 comprises a gas conducting core pipe 2, preferably made from polyethylene plastic and approved by the authorities, and covered by a hose 3 made from a thermoplastic material, such as a thermoplastic rubber material having a higher flexibility than the material of the core pipe. It is thus possible to flex the pipe 1 to be stored on a reel.

The gas plastic pipe 1 is preferably manufactured by co-extrusion of the core pipe 2 and the hose 3, the hose 3 being releasably mounted on the core pipe 2 without adhesion therebetween. As a result, it is particularly easy to remove the hose adjacent the end of the pipes when two pipe sections are be assembled, as shown in figure 2. In figure 2 two pipe sections 1 are shown, assembled with a welding 4, whereafter a connector 5, which may be placed on one of the pipe section before the assembly, is drawn over the completed welding 4, thus overlapping the hoses 3 of both pipe ends 1. As a result, the areas of the pipe sections 1 laid open at the ends and the welding 4 are protected. The connector 5 may be made from the same flexible rubber material as the hose 3.

Another advantage when using the releasable mounting of the hose 3 on the core pipe 2 is that any possible formation of cracks caused by an outer damage in the protective hose, does not spread to the core pipe, but stops when the hose 3 has been penetrated.

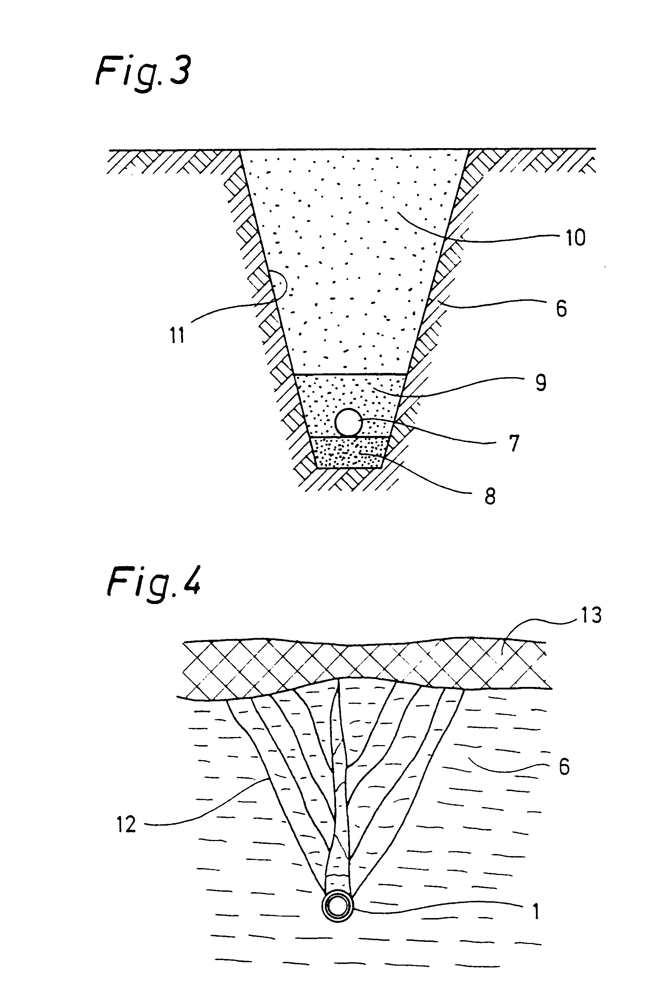

At the laying methods used to date with conventional gas plastic pipes 7 a canal 11 is dug in the ground 6 as shown in figure 3. A so-called levelling layer 8 of sand or gravel is laid, preferably having a minimum thickness of about 10 cm, and on top of which the traditional gas plastic pipe 7 is laid. Hereafter a protective layer 9 of sand or gravel is placed around the gas plastic pipe 7, preferably in a thickness of about 20 cm. During the compression the dug up earth 10 is fill to the surface of the ground.

The gas plastic pipe 1 according to the invention may be laid directly in the ground as shown in figure 4, for instance by means of a laying method such as ploughing. A reel with the gas plastic pipe 1 is placed on the vehicle in question drawing the laying plough and during the laying the plastic pipe 1 is drawn continuously from said reel through a cavity in the plough and out through same in the layind depth required, preferably about 80 to 90 cm below the surface of the ground. It is thus possible to lay the gas plastic pipe in a particularly fast and labour saving manner, as it is possible to lay about 2 metres of the gas plastic pipe 1 per hour.

The thermoplastic rubber hose is able to resist all stresses to which the gas plastic pipe is subjected during the actual laying and the scratches and the compressive stress caused by stones, aggregate and the like in the ground which otherwise will reduce the life of the plastic pipe. The previously required levelling layers and protective layers around the plastic pipe are thereby not necessary as at the known gas plastic pipes. Laying by means of ploughing also causes less environmental damage, as the soil during the ploughing will sink down into the plough furrow 12 by itself and any turf 13 on the surface will fall into place immediately after the laying, the turf 13 will thus not dry up.

At a particularly advantageous embodiment the thermoplastic rubber hose may be transparent, whereby data and information on the core pipe may be viewed and furthermore, a tracking cable may be inserted between the core pipe and the rubber hose, the gas plastic pipe 1 is thus easy to find at a later stage.

## Claims

1. Plastic pipe (1), preferably to be laid in the ground (6) and particularly to be used as a gas or water conducting pipe, characterised in that the pipe (1) comprises a gas or water conducting core pipe (2) provided with an outer hose (3) of a thermoplastic material having a higher flexibility than the material of the core pipe (2).

2. Plastic pipe according to claim 1, characterised in that the hose (3) is releasably mounted on the core pipe (2).

3. Plastic pipe according to claim 1 or 2, characterised in that the pipe (1) is manufactured by means of co-extrusion of the core pipe (2) and the hose (3) without adhesion therebetween.

4. Plastic pipe according to one or more of the preceding claims, characterised in that the hose (3) is made from a transparent material.

5. Plastic pipe according to one or more of the preceding claims, characterised in that the hose (3) is made from a rubber material.

Fig.1

Fig.2

## Fig. 3

## Fig. 4